# DEMANDE DE BREVET EUROPEEN

(11) **EP 3 920 287 A1**
(43) Date de publication de la demande: **08.12.2021**
(21) Numéro de dépôt: 21177847.7
(22) Date de dépôt: 04.06.2021
(51) Int. Cl.: H01M 8/04014, H01M 8/04111

(54) **DISPOSITIF HYBRIDE DE GENERATION DE PUISSANCE**

(30) Priorité: 04.06.2020 FR 2005848
(71) Demandeur: Commissariat à l'énergie atomique et aux énergies alternatives, 75015 Paris (FR)
(72) Inventeur: DUMOULIN, Pierre, 38054 GRENOBLE CEDEX 09 (FR); TAUVERON, Nicolas, 38054 GRENOBLE CEDEX 09 (FR)
(74) Mandataire: Ahner, Philippe

(57) **Abrégé**

L'invention concerne un dispositif hybride qui comprend :
- une pile à combustible à oxyde solide (210) qui comprend une anode (211) au niveau de laquelle un gaz combustible est injecté à une température T1, et rejeté par ladite pile sous forme d'un flux gazeux anodique à une température T2 supérieure à T1;
- un brûleur (270) relié à une sortie de l'anode (211), et agencé pour former un flux gazeux principal à partir de la combustion des gaz imbrûlés du flux gazeux anodique ;
- une turbine de détente (280) destinée à produire une énergie mécanique lors d'une détente du flux gazeux principal ;
- un compresseur (290) destiné, par consommation de l'énergie mécanique produite par la turbine de détente (280), à compresser à une pression Pf, avantageusement supérieure à 1 bar, le flux gazeux principal détendu par la turbine de détente (280).

## Description

### DOMAINE TECHNIQUE

La présente invention concerne le domaine des piles à combustible à oxydes solides (« SOFC » ou « Solid Oxide Fuel Cell » selon la terminologie Anglo-Saxonne), et notamment le domaine des dispositifs hybrides pourvus de telles piles.

L'invention concerne en particulier un dispositif pourvu d'une pile à combustible à oxydes solides fonctionnant à pression atmosphérique et associée à des moyens de valorisation d'une énergie thermique produite par la pile. Les moyens de valorisation sont notamment agencés pour l'optimisation du rendement gazeux de la pile.

### ÉTAT DE LA TECHNIQUE ANTÉRIEURE

Les piles à combustible à oxydes solides (« SOFC » ou « Solid Oxide Full Cell » selon la terminologie Anglo-Saxonne), bien connues de l'homme du métier, font l'objet d'intenses développements. En effet, ces piles, dont l'eau est le seul produit de réaction, semblent pouvoir répondre favorablement aux normes environnementales et notamment à la problématique de réduction des émissions de gaz à effet de serre.

Les piles à combustible à oxydes solides comprennent à cet égard au moins un empilement électrochimique pourvu d'un électrolyte intercalé entre une anode et une cathode.

En fonctionnement, l'anode et la cathode sont le siège de réactions électrochimiques, tandis que l'électrolyte permet le transport d'ions de l'anode vers la cathode. Plus particulièrement, le dioxygène injecté au niveau de la cathode est réduit en ions O²⁻ qui migrent au travers de l'électrolyte vers l'anode. En parallèle, du dihydrogène subit une réaction d'oxydation au niveau de l'anode qui conduit à la formation d'ions H⁺. Les ions O² et les ions H⁺ se combinent ensemble à proximité de l'anode pour former de l'eau, tandis que les électrons échangés lors de ces réactions d'oxydo-réduction conduisent à la production d'un courant électrique.

Néanmoins, une telle pile reste sujette à d'importantes dissipations thermiques, et présente, par voie de conséquence, un rendement électrique limité, et notamment inférieur à 50%.

Différentes alternatives ont alors pu être envisagées pour pallier ce problème.

Il a notamment été proposé de mettre en œuvre un cycle organique de Rankine pour valoriser les dissipations thermiques et les convertir en courant électrique. Toutefois, l'amélioration du rendement associé à un tel cycle reste limitée.

Il a également été proposé de faire fonctionner une pile à combustible à oxydes solides sur le principe d'une turbine à gaz, et en particulier, de mettre ladite pile à la place de la chambre de combustion. Toutefois cette solution nécessite d'assurer la tenue en pression de la pile, et est, par voie de conséquence, compliquée à mettre en œuvre. Par ailleurs, cette solution présente un coût qui n'est pas compatible avec les standards relatifs à la production d'énergie.

L'invention a donc pour but de proposer un dispositif hybride de génération d'une puissance électrique pourvu d'au moins une pile à combustible à oxyde solide et permettant de valoriser efficacement les dissipations thermique de ladite pile.

### EXPOSÉ DE L'INVENTION

Le but de l'invention est atteint par un dispositif hybride de génération de puissance qui comprend :
- une pile à combustible à oxyde solide qui comprend une anode au niveau de laquelle un gaz combustible est susceptible d'être injecté à une température T1, et rejeté par ladite pile, après réaction au niveau de l'anode, sous forme d'un flux gazeux anodique à une température T2 supérieure à la température T1;
- un bruleur catalytique relié à une sortie de l'anode, et agencé pour former un flux gazeux principal à partir de la combustion des gaz imbrûlés du flux gazeux anodique ;
- une turbine de détente destinée à produire une énergie mécanique lors d'une détente du flux gazeux principal ;
- un compresseur destiné, par consommation de l'énergie mécanique produite par la turbine de détente, à compresser à une pression Pf, avantageusement supérieure à 1 bar, le flux gazeux principal détendu par la turbine de détente.

Ainsi le flux gazeux principal peut être rejeté dans l'atmosphère à une pression supérieure à la pression atmosphérique.

Selon un mode de mise en œuvre, le compresseur et la turbine de détente comprennent un arbre rotatif commun permettant le transfert, au moins partiel, de l'énergie mécanique produite par la turbine de détente vers le compresseur.

Selon un mode de mise en œuvre, ledit dispositif comprend une génératrice agencée pour convertir l'énergie mécanique en une énergie électrique destinée à être consommée au moins en partie par le compresseur pour la compression du gaz produit susceptible d'être détendu par la turbine de détente.

Selon un mode de mise en œuvre, ledit dispositif comprend un premier échangeur de chaleur agencé pour chauffer le gaz combustible avant son injection au niveau de l'anode par échange thermique avec le flux gazeux anodique.

Selon un mode de mise en œuvre, le dispositif comprend en outre un pré-reformeur destiné à opérer un reformage du gaz combustible avant son injection dans la pile à combustible à oxydes solides, avantageusement, l'opération de reformage comprend la production d'hydrogène à partir d'un alcane.

Selon un mode de mise en œuvre, le pré-formeur est agencé pour opérer le reformage du gaz combustible à l'issue de son préchauffage dans le premier échangeur thermique.

Selon un mode de mise en œuvre, la pile à combustible à oxydes solides comprend également une cathode au niveau de laquelle un gaz comburant est susceptible d'être injecté à une température T3, et rejeté par ladite pile, après réaction au niveau de la cathode, sous forme d'un flux gazeux cathodique à une température T4 supérieure à la température T3, le bruleur catalytique est également agencé pour assurer la combustion du flux cathodique gazeux qui, après combustion, forme avec le flux gazeux anodique brulé le flux gazeux principal.

Selon un mode de mise en œuvre, ledit dispositif comprend en outre un deuxième échangeur de chaleur agencé pour chauffer le gaz comburant, avant son injection au niveau de la cathode, par échange thermique avec le flux gazeux principal.

Selon un mode de mise en œuvre, le deuxième échangeur est agencé pour assurer l'échange thermique avec le flux gazeux principal détendu.

Selon un mode de mise en œuvre, une ligne de distribution d'eau est agencée pour distribuer de l'eau sous forme vapeur au niveau de la pile à combustible à oxydes solides.

Selon un mode de mise en œuvre, la ligne de distribution d'eau comprend au moins un évaporateur destiné à vaporiser l'eau circulant dans ladite ligne.

Selon un mode de mise en œuvre, l'au moins un évaporateur est agencé pour évaporer l'eau par échange thermique avec le flux gazeux principal.

### BRÈVE DESCRIPTION DES DESSINS

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
La figure 1 est une représentation schématique d'un dispositif hybride de génération de puissance selon une première alternative de la présente invention ;
La figure 2 est une représentation schématique d'un dispositif hybride de génération de puissance selon un premier aspect d'une deuxième alternative de la présente invention ;
La figure 3 est une représentation schématique d'un dispositif hybride de génération de puissance selon un deuxième aspect d'une deuxième alternative de la présente invention.

### EXPOSÉ DÉTAILLÉ DE MODES DE RÉALISATION PARTICULIERS

L'invention concerne un dispositif hybride de génération de puissance.

A cet égard, le dispositif comprend une pile à combustible à oxydes solides ainsi que des agencements destinés à valoriser la chaleur produite par la pile lors de son fonctionnement afin d'améliorer le rendement global de l'installation. A cet égard, le dispositif comprend notamment un agencement permettant d'utiliser l'énergie relative à la chaleur produite pour compresser les gaz produits par ledit dispositif avant leur rejet dans l'atmosphère.

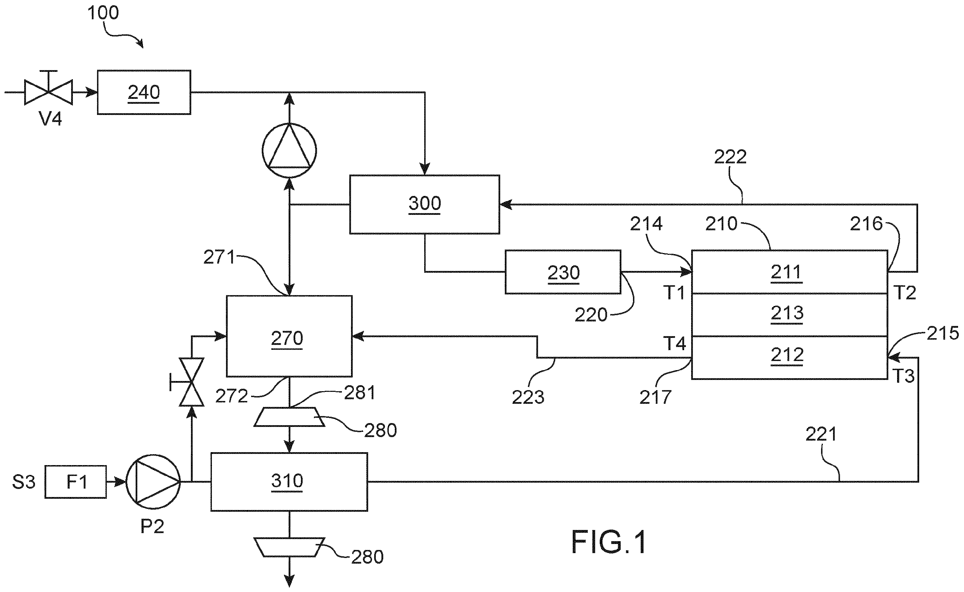

Aux figures 1 à 3, on peut voir un dispositif hybride de génération de puissance 100 (ci-après « dispositif 100 ») selon la présente invention.

Le dispositif 100 comprend une pile à combustible à oxyde solides 210 (ci-après « pile 210 »). La pile peut notamment comprendre un empilement d'au moins une cellule électrochimique élémentaire (ci-après « cellule »). En particulier, une cellule est pourvue chacune d'une anode 211, d'une cathode 212 et entre lesquelles est intercalé un électrolyte 213. La pile à combustible fonctionne à pression atmosphérique, i.e. elle est alimentée avec des gaz à pression atmosphérique.

Le dispositif 100 comprend des lignes de distribution permettant d'alimenter en gaz à pression atmosphérique la pile 210.

En particulier, une ligne de distribution en gaz combustible 220 est reliée à une entrée, dite entrée anodique 214, de l'au moins une anode 211, et destinée à injecter un gaz combustible à une température T1, qui peut notamment être comprise entre 500°C et 700°C.

De manière équivalente, une ligne de distribution en gaz comburant 221 est reliée à une entrée, dite entrée cathodique 215, de l'au moins une cathode 212, et destinée à injecter un gaz comburant à une température T3, qui peut notamment être comprise entre 500°C et 700°C.

Le dispositif 100 comprend également des lignes d'évacuation des gaz de la pile 210.

En particulier, le dispositif 100 comprend une ligne d'évacuation de gaz anodique 222 reliant la sortie 216 de l'anode 211, dans laquelle un flux gazeux anodique est évacué de l'anode 211 à une température T2 supérieure à la température T1, et notamment comprise entre 700°C et 900°C.

De manière équivalente, le dispositif 100 comprend une ligne d'évacuation de gaz cathodique 223 reliée à la sortie 217 de la cathode 212, dans laquelle un flux gazeux cathodique est évacué de l'anode 211 à une température T4 supérieure à la température T3, et notamment comprise entre 700°C et 900°C.

L'injection du gaz combustible au niveau de l'entrée 214 de l'anode peut mettre en œuvre un pré-réformeur 230 (figure 1). De manière avantageuse, le pré-réformeur 230 est adapté pour la produire de l'hydrogène à partir d'un alcane ou d'un mélange d'alcanes, et plus particulièrement à partir de méthane. Ainsi, la ligne de distribution en gaz combustible 220 peut être directement alimentée en gaz de ville S1 (vanne V4) en vue de son réformage dans le pré-réformeur 230. Le dispositif 100 peut par ailleurs être muni d'un moyen 240 permettant de désulfuriser le gaz de ville avant son traitement dans le pré-réformeur 230.

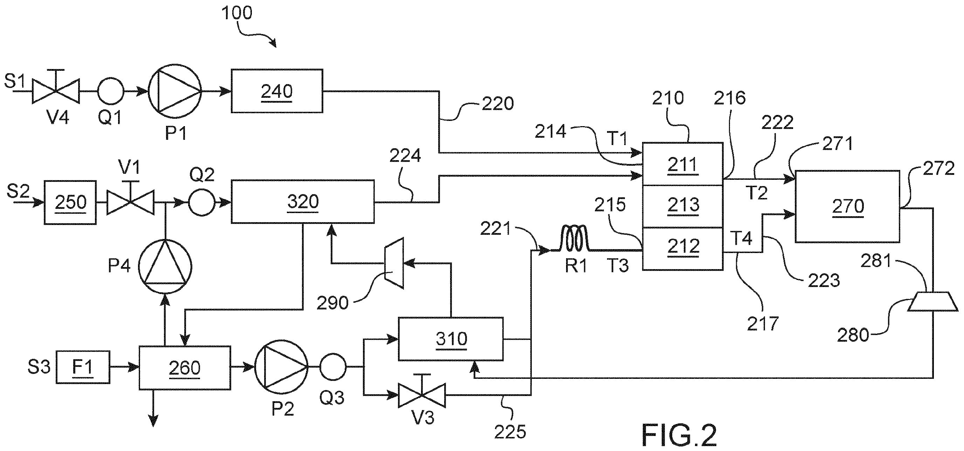

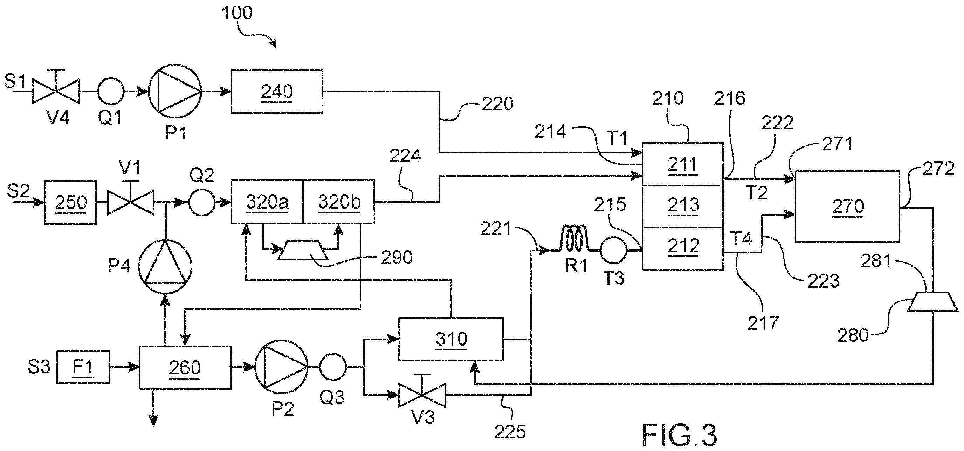

La ligne de distribution en gaz combustible 220 peut également comprendre un détendeur P1 et un débitmètre Q1 agencés pour imposer une pression de gaz combustible compatible avec les paramètres de fonctionnement de la pile 210 (figures 2 et 3).

De manière alternative, et tel qu'illustré aux figures 2 et 3, le dispositif 100 peut être agencé de sorte que le gaz de ville soit distribué, après désulfurisation, sans pré-formage, au niveau de l'anode 211.

La distribution de gaz de ville en vue de son reformage directement au niveau de l'anode peut également impliquer une distribution d'eau via une ligne de distribution d'eau 224 reliée à l'entrée 214 de l'anode 211. L'eau distribuée peut notamment provenir d'un réseau de distribution domestique S2 et être plus particulièrement de l'eau de ville. Un traitement destiné à purifier l'eau de ville peut être assuré par des moyens de traitement 250 (figures 2 et 3). La ligne de distribution d'eau 224 peut également être pourvue d'une vanne V1 et d'un débitmètre Q2 destinés contrôler le débit d'eau dans ladite ligne 224.

Le gaz comburant distribué par la ligne de distribution de gaz comburant 221 au niveau de l'entrée 215 de la cathode 212 peut comprendre du dioxygène. La source S3 d'oxygène peut notamment être l'air ambiant. A cet égard, le dispositif 100 peut comprendre un filtre F1 (figures 1 à 3) et un condenseur 260 (figures 2 et 3) destinés à traiter l'air ambiant avant son admission dans la ligne distribution 221.

La ligne de distribution de gaz comburant 221 peut également être associée à un détendeur P2 et un débitmètre Q3 (figures 2 et 3) destinés imposer un débit de gaz comburant compatible avec les paramètres de fonctionnement de la pile 210.

Le dispositif 100 comprend également un brûleur 270, et notamment un brûleur catalytique non refroidi. Ce bruleur 270 est agencé pour bruler les gaz imbrulés du flux gazeux anodique. Plus particulièrement, la ligne d'évacuation de gaz anodique 222 relie la sortie 216 et une entrée 271 du brûleur 270, et assure ainsi l'écoulement du flux gazeux anodique issu de l'anode vers le brûleur 270. La combustion du flux anodique gazeux dans le brûleur 270 produit un flux gazeux principal sous pression.

Le brûleur 270 peut également être agencé pour assurer la combustion du flux cathodique gazeux qui, après combustion, forme avec le flux gazeux anodique brulé le flux gazeux principal.

Le dispositif 100 comprend également une turbine de détente 280 connectée fluidiquement avec une sortie 272 du brûleur. En particulier, un conduit relie la sortie 272 à une entré 281 de la turbine de détente 280. La turbine de détente 280 est agencée pour détendre le flux gazeux principal et ainsi convertir l'énergie associée à cette détente en énergie, et notamment en énergie mécanique.

Cette énergie mécanique peut être transférée à un moyen de conversion d'énergie qui est notamment agencé pour convertir une énergie mécanique en énergie électrique. Ce moyen de conversion peut, par exemple, comprendre une génératrice.

A l'issue de la détente, la pression du flux gazeux principal est inférieure à la pression atmosphérique de sorte que son rejet en l'état dans l'atmosphère n'est pas possible. Ainsi, le dispositif 100 est également pourvu d'un compresseur 290 destiné à compresser à une pression Pf, avantageusement supérieure à 1 bar, le flux gazeux principal détendu par la turbine de détente 280 avant son rejet dans l'atmosphère.

Selon la présente invention, le compresseur 290 est agencé pour consommer, en partie, l'énergie mécanique produite par la turbine de détente 280.

Selon une première variante, le compresseur 290 et la turbine de détente 280 comprennent un arbre rotatif commun permettant le transfert, au moins partiel, de l'énergie mécanique produite par la turbine de détente vers le compresseur.

Selon une deuxième variante, le compresseur 290 peut être agencé pour consommer l'énergie électrique produite par la génératrice.

Ainsi, l'association de la turbine de détente 280 et du compresseur 290 selon les principes précités limite le recours à une source énergétique externe destinée au fonctionnement du compresseur. Il en résulte un rendement énergétique favorable au regard des solutions connues de l'état de la technique.

Par ailleurs, et compte-tenu de la température élevée des flux gazeux anodique et cathodique, ce rendement global peut encore être amélioré.

L'amélioration du rendement peut notamment impliquer l'adjonction de moyens permettant une dissipation thermique additionnelle du flux gazeux principal à l'issue de sa détente de manière à compresser un flux gazeux principal présentant une température plus faible. Dans ces conditions, l'énergie nécessaire à la compression du flux gazeux principal par le compresseur reste relativement faible.

A cet égard, la figure 1 représente une première alternative qui met en œuvre un premier échangeur 300 et un deuxième échangeur 310.

En particulier, le premier échangeur 300 permet un préchauffage du gaz combustible destiné à être injecté au niveau de l'anode 211 par échange thermique avec le flux gazeux anodique. De manière avantageuse, ce premier échangeur 300 peut être agencé de sorte que le préchauffage du gaz combustible soit exécuté avant son pré-réformage dans le pré-réformeur 230.

Le deuxième échangeur 310, pour sa part, permet un préchauffage du gaz comburant avant son injection au niveau de la cathode 212 par échange thermique avec le flux gazeux principal. De manière avantageuse, le deuxième échangeur 310 est agencé pour que le flux gazeux principal échange sa chaleur après sa détente par la turbine de détente 280 (et avant sa compression par la compresseur 290). Cette configuration assure un débit du flux gazeux principal dans l'échangeur suffisamment faible pour permettre un échange thermique optimal.

Les figures 2 et 3 représentent une deuxième alternative qui met également en œuvre le deuxième échangeur 310, et selon un agencement équivalent à celui proposé dans la première alternative. Selon cette deuxième alternative, le dispositif 100 comprend une ligne de dérivation 225 permettant de distribuer le gaz comburant sans imposer de préchauffage dudit gaz dans le deuxième échangeur 310. Le dispositif 100 est également pourvu d'une vanne de dérivation V3 qui permet, au choix, d'imposer l'écoulement du gaz comburant soit dans le deuxième échangeur 310 soit dans le conduit secondaire 225, soit en partie dans le deuxième échangeur 310 et dans le conduit secondaire 225. Ainsi, avec l'ouverture de la vanne de de dérivation V3, on peut gérer aisément et rapidement la puissance de chauffe du gaz comburant en faisant varier le débit qui rentre dans le deuxième échangeur 310 afin d'apporter la puissance de chauffe requise par la pile 210 en fonctionnement nominal. Par ailleurs, faire varier le débit qui entre dans le deuxième échangeur 310 permet de compenser la perte des performances du deuxième échangeur 310 au cours de la vie du dispositif 100.

Par ailleurs, le dispositif 100 peut également être pourvu d'une résistance chauffante R1 agencée pour chauffer le gaz comburant avant son injection au niveau de la cathode 212. En particulier, la résistance R1 peut être adaptée pour chauffer le gaz comburant à une température d'au moins 700°C. Cette résistance R1 permet notamment de démarrer aisément et à moindre coût le dispositif 100.

Le dispositif selon cette deuxième alternative peut également comprendre au moins un évaporateur 320, 320a, 320b destiné à vaporiser l'eau avant sa distribution dans la pile 210 et notamment au niveau de l'anode 211.

Plus particulièrement, et selon un premier aspect de cette deuxième variante illustré à la figure 2, la ligne de distribution d'eau 224 comprend un évaporateur 320 dans lequel l'eau destinée à être distribuée au niveau de l'anode 211 est vaporisée par échange thermique avec le flux gazeux principal compressé par le compresseur 290.

Selon un deuxième aspect de cette deuxième variante illustré à la figure 3, l'au moins un évaporateur comprend deux évaporateurs en cascade dits, respectivement, premier évaporateur 320a et deuxième évaporateur 320b. Plus particulièrement, le compresseur 290 est intercalé entre les deux évaporateurs. Le dispositif de la figure 3 présente l'avantage de permettre de produire de l'électricité tout en maximisant les calories renvoyées au fluide provenant du réseau de distribution domestique S2.

Un dispositif selon la figure 3 sans vanne de dérivation V3 ne sort pas du cadre de la présente invention.

L'agencement proposé pour le dispositif 100 permet ainsi un meilleur rendement global. Par ailleurs, l'agencement de la turbine, du ou des échangeurs et du compresseur permet de faciliter l'intégration sous pression.

## Revendications

1. Dispositif hybride de génération de puissance (100) qui comprend :
- une pile à combustible à oxyde solide (210) qui comprend une anode (211) au niveau de laquelle un gaz combustible est susceptible d'être injecté à une température T1, et rejeté par ladite pile, après réaction au niveau de l'anode (211), sous forme d'un flux gazeux anodique à une température T2 supérieure à la température T1 ;
- un brûleur (270) catalytique relié à une sortie de l'anode (211), et agencé pour former un flux gazeux principal à partir de la combustion des gaz imbrûlés du flux gazeux anodique ;
- une turbine de détente (280) destinée à produire une énergie mécanique lors d'une détente du flux gazeux principal ;
- un compresseur (290) destiné, par consommation de l'énergie mécanique produite par la turbine de détente (280), à compresser à une pression Pf, avantageusement supérieure à 1 bar, le flux gazeux principal détendu par la turbine de détente (280).

2. Dispositif selon la revendication 1, comprenant une ligne de distribution d'eau est agencée pour distribuer de l'eau sous forme vapeur au niveau de la pile à combustible à oxydes solides, ladite ligne de distribution d'eau comprenant deux évaporateurs (320a, 320b) destinées à vaporiser l'eau circulant dans ladite ligne, le compresseur (290) étant intercalé entre les deux évaporateurs (320a, 320b).

3. Dispositif selon la revendication 2, dans lequel les deux évaporateurs (320a, 320b) sont agencés pour évaporer l'eau par échange thermique avec le flux gazeux principal.

4. Dispositif selon la revendication 1, 2 ou 3, dans lequel le compresseur (290) et la turbine de détente (280) comprennent un arbre rotatif commun permettant le transfert, au moins partiel, de l'énergie mécanique produite par la turbine de détente (280) vers le compresseur (290).

5. Dispositif selon la revendication 1, 2 ou 3, dans lequel ledit dispositif comprend une génératrice agencée pour convertir l'énergie mécanique en une énergie électrique destinée à être consommée au moins en partie par le compresseur (290) pour la compression du gaz produit susceptible d'être détendu par la turbine de détente (280).

6. Dispositif selon l'une des revendications 1 à 5 dans ledit dispositif comprend un premier échangeur (300) de chaleur agencé pour chauffer le gaz combustible avant son injection au niveau de l'anode (211) par échange thermique avec le flux gazeux anodique.

7. Dispositif selon la revendication 6, dans lequel le dispositif comprend en outre un pré-réformeur (230) destiné à opérer un reformage du gaz combustible avant son injection dans la pile à combustible à oxydes solides, avantageusement, l'opération de reformage comprend la production d'hydrogène à partir d'un alcane.

8. Dispositif selon la revendication 7, dans lequel le pré-réformeur (230) est agencé pour opérer le reformage du gaz combustible à l'issue de son préchauffage dans le premier échangeur (300) thermique.

9. Dispositif selon l'une des revendications 1 à 8, dans lequel la pile à combustible à oxydes solides comprend également une cathode (212) au niveau de laquelle un gaz comburant est susceptible d'être injecté à une température T3, et rejeté par ladite pile, après réaction au niveau de la cathode (212), sous forme d'un flux gazeux cathodique à une température T4 supérieure à la température T3, le brûleur (270) catalytique est également agencé pour assurer la combustion du flux cathodique gazeux qui, après combustion, forme avec le flux gazeux anodique brulé le flux gazeux principal.

10. Dispositif selon la revendication 9, dans lequel ledit dispositif comprend en outre un deuxième échangeur (310) de chaleur agencé pour chauffer le gaz comburant, avant son injection au niveau de la cathode (212), par échange thermique avec le flux gazeux principal.

11. Dispositif selon la revendication 10, comportant une vanne de dérivation (V3) disposée de sorte à permettre d'imposer l'écoulement du gaz comburant soit uniquement dans le deuxième échangeur (310), soit uniquement dans un conduit secondaire relié à la cathode (2), soit en partie dans le deuxième échangeur (310) et en partie dans le conduit secondaire.

12. Dispositif selon la revendication 10 ou 11, dans lequel le deuxième échangeur (310) est agencé pour assurer l'échange thermique avec le flux gazeux principal détendu.
